## Europäisches Patentamt

## European Patent Office

## Office européen des brevets

(19)

(11) Veröffentlichungsnummer: **0 212 078**
**B1**

(12) **EUROPÄISCHE PATENTSCHRIFT**

(45) Veröffentlichungstag der Patentschrift:
**28.11.90**

(51) Int. Cl.⁵: **G01B 15/02**

(21) Anmeldenummer: **86106795.7**

(22) Anmeldetag: **17.05.86**

(54) **Vorrichtung zur Messung des Dickenprofils von gewalzten Bändern.**

(30) Priorität: **23.08.85 DE 3530109**

(43) Veröffentlichungstag der Anmeldung:
**04.03.87 Patentblatt 87/10**

(45) Bekanntmachung des Hinweises auf die Patenterteilung:
**28.11.90 Patentblatt 90/48**

(84) Benannte Vertragsstaaten:
**AT BE DE FR GB IT LU NL**

(56) Entgegenhaltungen:
**DE-A- 3 140 714**
**DE-A- 3 425 295**
**GB-A- 2 084 829**
**US-A- 3 866 047**
**US-A- 4 495 635**

(73) Patentinhaber: **Hoesch Stahl Aktiengesellschaft, Rheinische Strasse 173, D-4600 Dortmund 1(DE)**

(72) Erfinder: **Kopineck, Hermann-Josef, Prof. Dr. rer. nat., Wildbannweg 36, D-4600 Dortmund 50(DE)**
Erfinder: **Böttcher, Wolfgang, Dr., Auf dem Hilf 35, D-5840 Schwerte 4(DE)**
Erfinder: **Antpusat, Eduard, Haslindestrasse 6, D-4600 Dortmund 12(DE)**
Erfinder: **Otten, Heiner, Dipl.-Ing., Chemnitzer Strasse 41, D-4600 Dortmund 1(DE)**

## Beschreibung

Die Erfindung betrifft eine Vorrichtung zur Messung des Dickenprofils von gewalzten metallischen Blechen und Blechbändern mit einer Röntgenröhre, mit einer dicht vor dieser liegenden um deren Mittelpunkt drehoszillierenden Schlitzblende mit mehreren Schlitzen und mit in einem Abstand vor der Schlitzblende, entlang einer Linie fest installierten, auf die Strahlung der Röntgenröhre ausgerichteten Strahlungsempfängern und einem im Strahlengang zwischen der Röntgenröhre und den Strahlungsempfängern liegenden Auslaufrollgang für das zu messende Blech, dessen Rollrichtung senkrecht zur Linie der Strahlungsempfänger liegt und dessen Breite sich entlang der Linie der fest installierten Strahlungsempfänger erstreckt und mit einem an die Strahlungsempfänger und einen Weggeber der Schlitzposition angeschlossenen Verarbeitungsgerät zur Bestimmung der Strahlungsabsorption und der Zuordnung zu den Dicken des Blechbandes und den über der Breite des Blechbandes verteilten Meßpunkten oder Meßbereichen, welches Verarbeitungsgerät mit einem Anzeigegerät verbunden ist.

Eine Vorrichtung zur Dickenprofilmessung ist aus der DE-A 3 140 714 bekannt. Diese hat den Nachteil, daß nur relativ ungenaue Messungen durchgeführt werden können. Es ist wegen der Größe der Empfänger nicht möglich, das zu messende Blechband in schmale Bereiche zu unterteilen, zwischen denen keine nicht gemessenen Bereiche liegen. Ein weiterer Nachteil besteht darin, daß die Anzahl der verwendeten Strahlungsempfänger sehr groß ist, wodurch das Gerät kompliziert und teuer wird.

Aus der US-A 3 866 047 ist eine weitere Vorrichtung bekannt, die diese Nachteile behebt, weil sie mit breiten Strahlungsempfängern und einer beweglichen Schlitzblende arbeitet.

Diese Konstruktion hat den Nachteil, daß keine schmalen Meßbereiche zu erreichen sind, weil diese sehr schmale Schlitze in der Schlitzblende erfordern würden. Die lineare Bewegung der Schlitzblende würde in Verbindung mit schmalen Schlitzen in der Nähe der Umkehrpunkte der Bewegung keine Strahlung mehr durch die Schlitze fallen lassen. Es würde genau in der Mitte der Bewegung der Schlitzblende die Mittelachse des Schlitzes mit der Strahlrichtung übereinstimmen, so daß die volle Strahlung durch den Schlitz fällt. Dieser Fehler läßt sich nur hinreichend abschwächen, wenn die Schlitzblende einen größeren Abstand von der Strahlungsquelle hat, relativ lang und mit relativ breiten Schlitzen gebaut ist. Eine solche Schlitzblende hat eine große Masse, weshalb pro Sekunde nur wenige Meßwerte ermittelt werden können, weil die Schlitzblende nur sehr langsam oszillierend bewegt werden kann. Diese große Masse verursacht auch schwingende Bewegungen auf das gesamte Gestell, wodurch besonders bei größeren Entfernungen zwischen der Strahlungsquelle und dem Strahlungsempfänger keine schmalen Meßbereiche möglich sind.

Es ist aus der GB-A 2 084 829 auch eine rotierende Schlitzblende bekannt, die keine Schwingungen verursacht. Bei der Schlitzblende muß ebenfalls der Abstand zwischen der Strahlungsquelle und der Schlitzblende relativ groß sein, was ebenfalls zu einer ungenügenden örtlichen Auslösung führt.

Eine dicht vor der Strahlungsquelle liegende rotierende Schlitzblende mit extrem schmalen Schlitzen ist in der am 20.03.86 veröffentlichten DE-A 3 425 295 beschrieben. Bei dieser fällt wegen der um die Strahlungsquelle herumgeführten Rotationsbewegung der Schlitzblende die Mittelachse jedes Schlitzes immer mit der Strahlrichtung zusammen. Die Vorrichtung nach der DE-A 3 425 295 besitzt deshalb die für den Einsatz in Walzwerken erforderliche hohe örtliche Auflösung. Ein Nachteil besteht in der großen Anzahl der Schlitze, von denen nur etwa ein Zehntel in jedem Augenblick im Einsatz ist und durchstrahlt wird. Die äußerst genaue Herstellung der schmalen Schlitze ist sehr teuer. Ein weiterer Nachteil besteht darin, daß kleine Fehler bei der Schlitzherstellung unvermeidlich sind. Kleine Fehler wirken sich bei den großen Entfernungen zu den Strahlungsempfängern so stark aus, daß diese bei der Auswertung durch einen Korrekturfaktor berücksichtigt werden müssen.

In der praktischen Ausführung sind 150 Schlitze mit ca. 1 mm Breite für die Schlitzblende notwendig und die Reihe der Strahlungsempfänger enthält 14 Strahlungsempfänger, so daß 150 mal 14 Korrekturfaktoren entstehen, deren Berücksichtigung einen großen Rechneraufwand im Verarbeitungsgerät bewirkt. Ein weiterer Nachteil besteht darin, daß bei den rauhen Walzwerksbedingungen und den erforderlichen extrem genauen Messungen die Vorrichtung sehr oft nachgeeicht werden muß, wobei jeder Korrekturfaktor von neuem bestimmt werden muß.

Der vorliegenden Erfindung liegt die Aufgabe zugrunde, eine Vorrichtung zur Messung des Dickenprofils von gewalzten metallischen Bändern zu schaffen, die unter Beibehaltung einer hohen örtlichen Auflösung der Messungen mit einer leicht zu fertigenden Schlitzblende und einem kleinen und leicht zu eichenden Verarbeitungsgerät auskommt, bei der außerdem die Meßergebnisse in einem genauen konstant bleibenden Abstand vom Rand des Bandes aus gemessen werden.

Diese Aufgabe wird mit der Vorrichtung entsprechend Anspruch 1 gelöst. Weiterbildungen der Erfindungen sind in den Ansprüchen 2 bis 10 beschrieben, und ein Verfahren zur Eichung der Vorrichtung wird durch die Merkmale des Anspruchs 11 definiert.

Die Schlitzblende braucht nur um die äußerst geringe Drehung von weniger als 5° hin- und herbewegt zu werden, weil sie so dicht wie möglich in der Nähe der Röntgenröhre sitzt und gleichzeitig die Strahlungsempfänger relativ weit von der Röntgenröhre entfernt liegen und die Schlitzblende gleichzeitig mit einer größeren Anzahl von Schlitzen versehen ist.

Die Baulänge der Schlitzblende ist durch die Nähe der Röntgenröhre relativ kurz und dadurch ist auch ihre Masse klein. Durch die geringe Drehung von weniger als 5° wird nur eine relativ kleine Drehgeschwindigkeit benötigt. Dies hat zur Folge, daß nur geringe Massenkräfte in den Umkehrpunkten der Bewegung entstehen. Die geringen Massenkräfte können sogar ohne jeglichen Massenausgleich von den Fundamenten der Vorrichtung aufgenommen werden, ohne daß sich störende Schwingungen bemerkbar machen. Es ist selbstverständlich auch ein Massenausgleich in Form einer Masse möglich, die entgegen der Drehbewegung der Schlitzblende bewegt wird und deren Bewegung durch ein die Drehrichtung umkehrendes Zahnrad z. B. von der Bewegung der Schlitzblende abgeleitet wird.

Die Größe der Drehbewegung läßt sich noch weiter verringern, wenn die Anzahl der Schlitze in der Schlitzblende vergrößert wird. Es ist zweckmäßig, wenn für jeden Strahlungsempfänger auch ein Schlitz in der Schlitzblende vorgesehen ist. Es kann auch der Drehbereich eines Schlitzes über zwei oder mehr Strahlungsempfänger reichen.

Es wird die Dicke von genau in Bandlaufrichtung liegenden schmalen Streifen des Bandes gemessen, wenn die Drehung der Schlitzblende in Schritten mit dazwischen liegenden Verweilzeiten erfolgt, in denen die Schlitzblende still steht und die Meßwertaufnahme des Verarbeitungsgerätes während der Verweilzeit zwischen zwei Schritten der Schlitzblende eingeschaltet ist.

Das Ein- und Ausschalten der Meßwertaufnahme erfolgt durch einen Schalter oder ein berührungslos schaltendes Schaltelement, die am Antrieb der Schlitzblende, am zweckmäßigsten an einer Welle, angebaut sind, die pro Schritt der Schlitzblende sich um genau eine Umdrehung dreht. Der Schalter kann z. B. durch einen auf der Welle sitzenden geeignet gestalteten Nocken oder berührungslos durch z. B. reflektierte Lichtstrahlen in bekannter Weise betätigt werden.

Es ist zweckmäßig, wenn die Drehung der Schlitzblende nur so groß ist, daß vom Strahl weniger als 95 % der wirksamen Länge des Strahlungsempfängers überstrichen werden und an den Rändern des Strahlungsempfängers schmale Bereiche ausgelassen werden. Diese schmalen Bereiche dienen als ausgleichende Reserve, wenn sich während des Betriebes z. B. durch Wärmedehnungen kleine Lageunterschiede zwischen der Schlitzblende und den Strahlungsempfängern ergeben. Es ist so gewährleistet, daß der erste und der letzte Meßbereich immer noch ganz auf dem Strahlungsempfänger liegen.

Eine andere Möglichkeit, kleine Lageunterschiede auszugleichen, besteht dann, wenn der Anfang des im Durchlauf ersten Meßbereiches eines Strahlungsempfängers in dem für Strahlung unwirksamen kleinen Zwischenraum zwischen den Strahlungsempfängern beginnt und der Meßwert des ersten Meßbereiches durch einen entsprechenden Korrekturfaktor für die in den unwirksamen Zwischenraum fallende Strahlung berücksichtigt wird. Es ist günstig, wenn dieser Korrekturfaktor möglichst oft, z. B. nach jedem Banddurchlauf durch eine eichende Messung neu bestimmt wird. Er sollte jedoch spätestens alle 2 Stunden neu bestimmt werden. Wenn der Zwischenraum z. B. 6 mm breit ist, so können Lageunterschiede, die eine Ablenkung des Strahles bis 6 mm von der Soll-Position bewirken, ausgeglichen werden.

Die Schlitzblende hat die Form eines kleinen Segmentes eines Kreisringes. Es reicht vollkommen aus, wenn sich die Schlitzblende auf den zehnten Teil eines Kreises beschränkt und in die Schlitzblende mit gleichem Abstand untereinander 15 schmale Schlitze eingearbeitet sind, die radial in Richtung zum gedachten Mittelpunkt des Kreisringes stehen. Die gedachte Mittelachse der Röntgenröhre stellt die Drehachse des Kreisringes dar. Der durch einen Schlitz hindurchtretende Strahl trifft ca. 2 m von der Schlitzblende entfernt auf den diesem Schlitz zugehörigen Strahlungsempfänger, der eine Länge von ca. 15 haben kann. Die hin- und hergehende Bewegung des Strahles erfolgt nur über die 15 cm-Länge des Strahlungsempfängers. Der benachbarte Strahl des benachbarten Schlitzes tastet den benachbarten Strahlungsempfänger ab. Die hin- und hergehende Drehbewegung der Schlitzblende erfolgt um einen Drehwinkel, der weniger als 3° beträgt.

Wenn das zu messende Band so liegt, daß der Rand des Bandes innerhalb eines Meßbereiches liegt, so ist dieser Meßbereich für die Dickenprofilangabe nicht zu gebrauchen. Es ist dann von Vorteil, wenn im Verarbeitungsgerät die Meßwertauswertung so geschaltet ist, daß für die Dickenprofilangabe der Meßwert unterdrückt wird, der beim Beginn des Durchlaufs nach dem letzten Meßwert liegt, der keine Absorption anzeigt und ebenfalls der Meßwert unterdrückt wird, der gegen Ende des Durchlaufs vor dem ersten Meßwert liegt, der keine Absorption hat.

Die Eichung der Vorrichtung wird während des Betriebes in den kurzen Pausen zwischen zwei Banddurchgängen so vorgenommen, daß ohne ein in der Vorrichtung befindliches zu messendes Band gemessen wird und ein Mittelwert aus den Meßwerten der Strahlungsempfänger errechnet und jeder einzelne Meßwert eines Meßbereiches mit einem Korrekturfaktor so versehen wird, daß das Produkt Meßwert mal Korrekturfaktor den Mittelwert ergibt und die so gebildeten Korrekturfaktoren im Verarbeitungsgerät gespeichert werden und für die Verarbeitung der bei durchstrahltem Band gewonnenen Meßwerte benutzt werden.

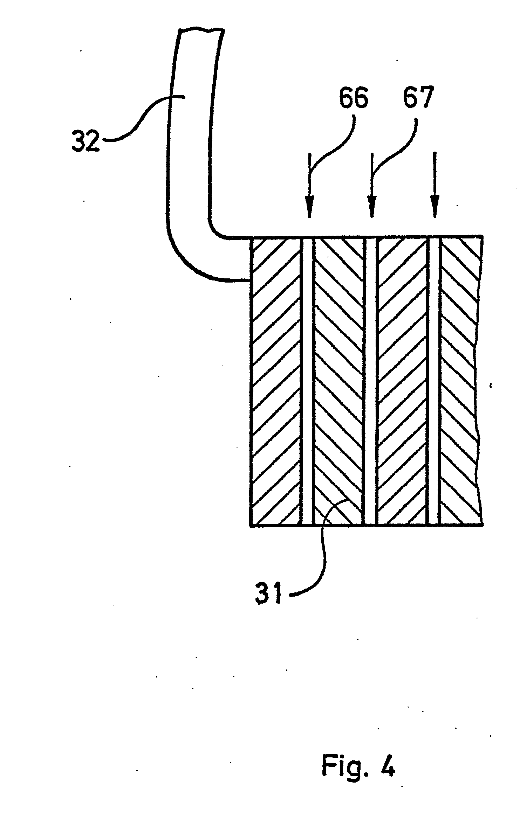

Ein Ausführungsbeispiel wird mit Hilfe der Figuren 1 bis 4 näher erläutert.

Es zeigen

Fig. 1 die Vorrichtung mit der Röntgenröhre und der Schlitzblende und den Strahlungsempfängern und

Fig. 2 einen durch eine Kurvenscheibe gesteuerten Schalter und

Fig. 3 einen Überblick über die den Strahlungsempfängern nachgeschalteten Geräte und

Fig. 4 eine Schlitzblende.

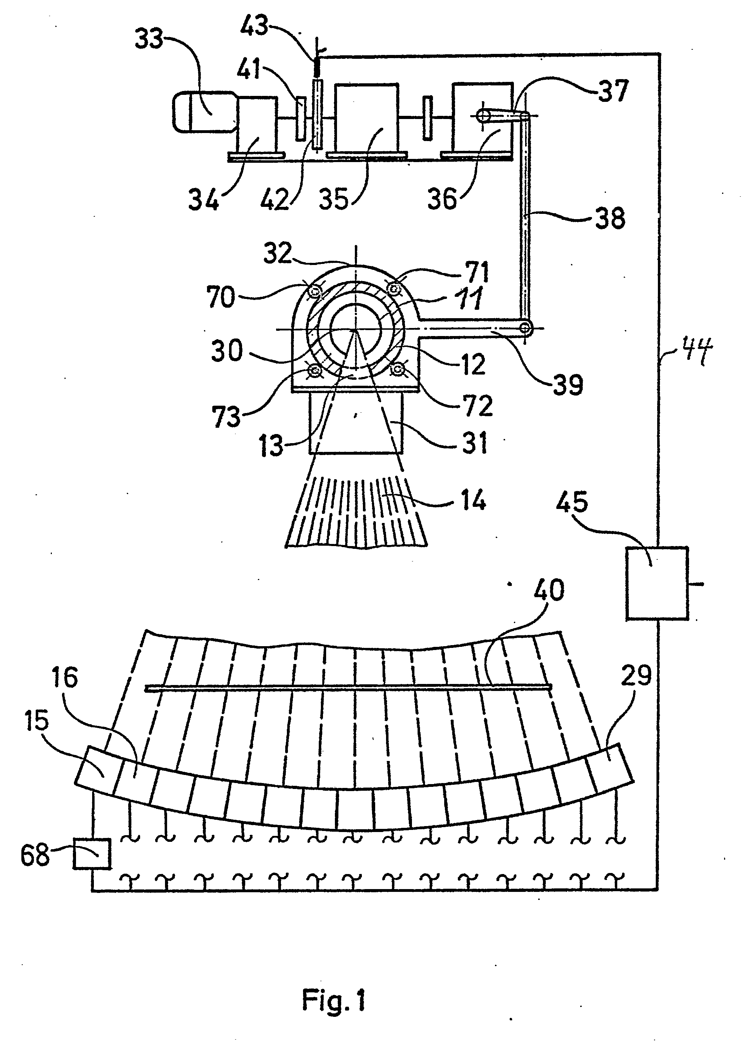

In Figur 1 ist die Röntenröhre 11 von einer Abschirmung 12 ringförmig umgeben. Die Abschirmung 12 hat ein Fenster 13, durch das ein Strahlenbündel 14 in Richtung zu den Strahlungsempfängern 15 - 29 strahlt. Die Strahlungsempfänger 15 - 29 sind auf einer Kreislinie angeordnet, deren Mittelpunkt mit der Mitte 30 der Röntgenröhre zusammenfällt. Vor dem Fenster 13 befindet sich die Schlitzblende 31, die um die Mitte 30 der Röntgenröhre 11 um weniger als 3° in beiden Drehrichtungen hin- und herbewegt wird.

An der Schlitzblende 31 ist ein Bügel 32 befestigt, der an den Stellen 70 bis 73 durch z. B. Rollen gelagert ist. Der Antrieb der Schlitzblende 31 für die hin- und hergehende Schwenkbewegung erfolgt durch dem Motor 33, der z. B. ein Drehstrommotor sein kann. Die Drehzahl des Motors 33 wird im Getriebe 34 herabgesetzt und mit der verminderten Drehzahl wird das Schrittgetriebe 35 angetrieben.

Das Schrittgetriebe 35 unterteilt die kontinuierliche Drehbewegung in eine schrittweise Drehbewegung. Es folgt auf eine 60 Millisekunden andauernde Drehung jeweils 70 Millisekunden andauernder Stillstand. Dies wird in bekannter Weise innerhalb des Schrittgetriebes durch z. B. eine geeignet ausgebildete Kurvenscheibe bewirkt. Vom Schrittgetriebe 35 wird das Pendelgetriebe 36 angetrieben. In diesem wird die Drehbewegung in bekannter Weise in eine Pendelbewegung umgewandelt, die über den Hebel 37, der Stange 38 und dem mit dem Bügel 32 verbundenen Hebel 39 auf die Schlitzblende 31 übertragen wird. Durch das Pendelgetriebe 36 erfolgt eine Bewegungsumkehr nach jeweils 14 Schritten des Schrittgetriebes 35. Die Strahlungsempfänger 15 - 29 sind in einem Ausführungsbeispiel 150 mm lang und auf einem Kreis innerhalb des zu untersuchenden Bandes 40 zwischen 2 Rollen eines nicht gezeichneten Auslaufrollganges eines Walzwerkes so angeordnet, daß diese alle vom Mittelpunkt 30 der Röntgenröhre 11 den gleichen Abstand haben.

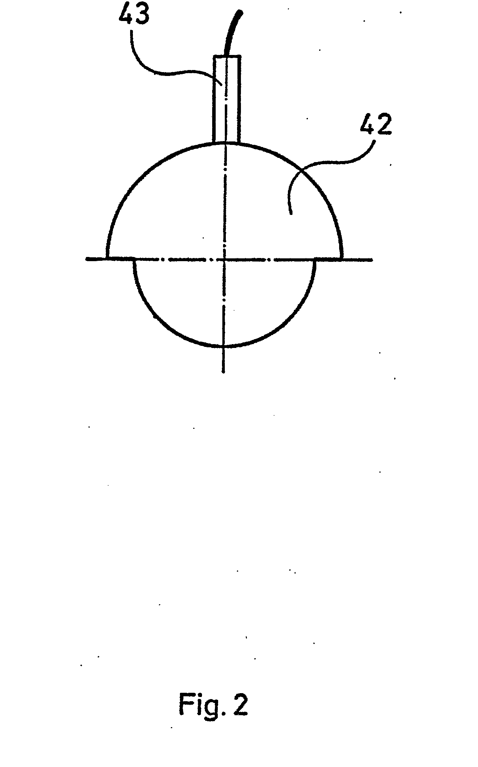

Die Röntgenröhre ist oberhalb des Auslaufrollganges angeordnet. Die Übersetzungen in den Getrieben sind so aufeinander abgestimmt, daß die Welle 41 genau eine Umdrehung ausführt, während die Schlitzblende sich um einen Schritt weiter bewegt und zwischen den Schritten verweilt. Ein Schalter 43 ist oberhalb einer Kurvenscheibe 42 angebracht, die auf der Welle 41 befestigt ist. Diese Kurenscheibe schaltet den Schalter 43 z. B. während einer Hälfte der Umdrehung ein und während der anderen Hälfte aus. Dieser Schalter 43 kann mechanisch betätigt werden er kann aber auch berührungslos z. B. mit Hilfe eines unterbrochenen Lichtstrahles betätigt werden, wenn z. B. der obere Teil der Kurvenscheibe in der Fig. 2 den Lichtstrahl einer Lichtschranke unterbricht und der untere Teil mit geringerem Radius den Lichtstrahl durchläßt, wodurch die Schaltfunktionen ausgelöst werden. Der Schalter 43 ist so eingestellt, daß jeweils ein Schalten bei Beginn und am Ende der zwischen den Schritten des Schrittgetriebes 35 liegenden Ruhepausen erfolgt.

Diese Schaltinformation des Schalters 43 wird der die Leitung 44 zu einem Weggeber 45 gegeben.

Der Weggeber ist auch mit jedem der Strahlungsempfänger 15 - 29 über jeweils einen Verstärker 68 verbunden. Der Ausgang des Weggebers 45 ist mit dem Verarbeitungsgerät 46 verbunden, dessen Ausgang wiederum mit dem Anzeigegerät 69 verbunden ist.

Der Schalter 43 bewirkt durch sein über den Weggeber 45 zum Verarbeitungsgerät 46 gehendes Signal, daß alle von den Strahlungsempfängern 15 bis 29 während der Bewegung der Schlitzblende 31 kommenden Meßsignale unterdrückt werden und nur die in den zwischen den Schritten liegenden Ruhepausen eingehenden Meßsignale verarbeitet werden.

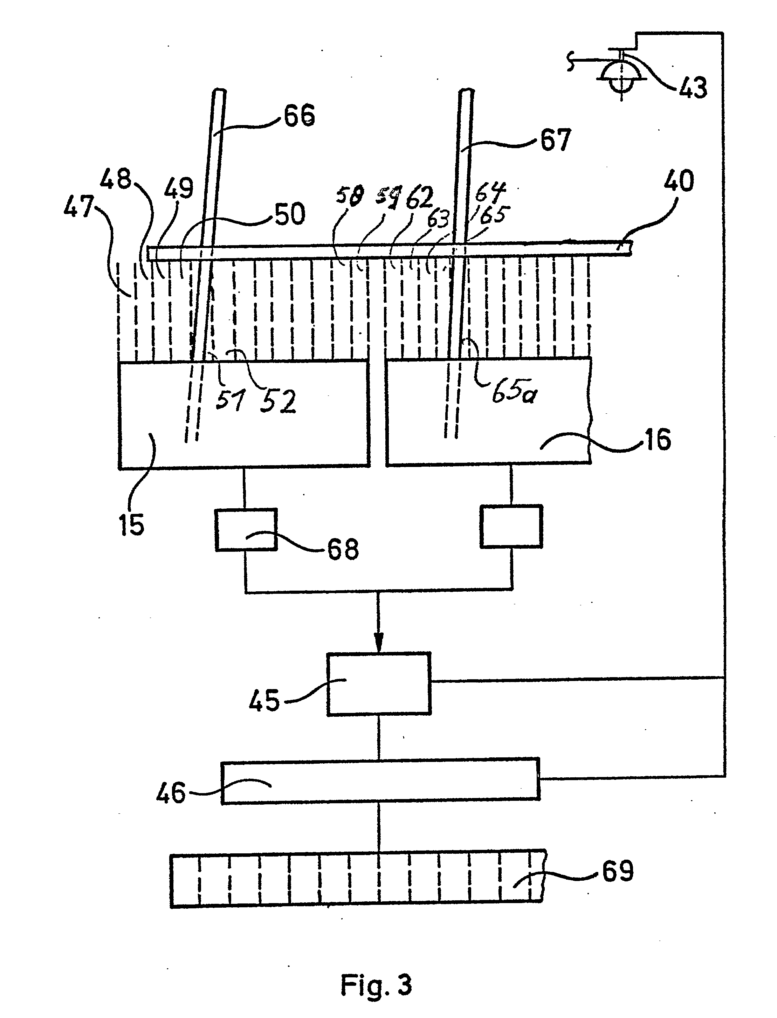

Der in der Fig. 3 dargestellte Strahlungsempfänger 15 enthält 13 Meßbereiche, die gestrichelt angedeutet sind und mit 47 bis 59 bezeichnet sind. Vom daneben liegenden Strahlungsempfänger 16 sind die ersten Meßbereiche mit 62 bis 65 a bezeichnet.

In der Fig. 3 befindet sich der von der Schlitzblende 31 hindurchgelassene Strahl 66 gerade im Meßbereich 51, während der nächstfolgende Schlitz der Schlitzblende 31 einen Strahl 67 auf den Meßbereich 65 a des folgenden Strahlungsempfängers 16 durchläßt.

Wenn die Schlitzblende 31 durch den Motor 33 und die zwischengeschalteten Getriebe gedreht wird, so durchläuft der Strahl 66 die Meßbereiche vom Strahlungsempfänger 15 in Richtung zum Strahlungsempfänger 16 und danach wieder zurück in 4 Sekunden. Wenn der Strahl 66 z. B. auf dem Meßbereich 51 während der Pause zwischen den Schritten steht, so wird der Strahl entsprechend der zu durchdringenden Dicke des Bandes 40 geschwächt. Im Strahlungsempfänger 15 wird ein von der Intensität des Strahles 66 abhängiger Strom erzeugt. Diser Strom fließt über den Verstärker 68 zum Weggeber 45 in das Verarbeitungsgerät 46, wo er in eine der Dicke des Bandes 40 entsprechende Meßgröße verarbeitet wird. Diese Meßgröße wird an das Anzeigegerät weitergegeben. Zusätzlich zum Anzeigegerät können auch weitere Geräte z. B. zur Korrektur des Walzprozesses angeschlossen sein.

Der Schalter 43 bewirkt in seiner z. B. unterbrochenen Stellung durch seine Verbindung zum Verarbeitungsgerät, daß alle von den Strahlungsempfängern 15 - 29 kommenden Meßsignale unterdrückt werden, wenn z. B. während einer halben Umdrehung der Welle 41 die Schlitzblende 31 um einen Schritt weiter bewegt wird. Die Meßsignale werden erst wieder verarbeitet, wenn bei der anderen Hälfte der Umdrehung der Welle 41 der Schalter in der geschlossenen Stellung steht.

Im Weggeber 45 wird die Anzahl der Stromunterbrechungen des Schalters 43 mitgezählt. Der Verstärker 68 überlagert dem Ausgangsstrom ein Erkennungssignal, das sich von den Erkennungssignalen der anderen Verstärker, die den anderen Strahlungsempfängern nachgeschaltet sind, unterscheidet. Aus dem Erkennungssignal erkennt der Weggeber 45, welchem Strahlungsempfänger die Meßgröße zuzuordnen ist und aus der mitgezählten Anzahl der Unterbrechungen des Schalters 43 erkennt der Weggeber, in welchem Meßbereich des betreffenden Strahlungsempfängers sich gerade der Strahl befindet.

Der Weggeber 45 gibt die Meßgröße zusammen mit einem jeden Meßbereich zugeordnetem Signal an das Verarbeitungsgerät 46.

Dieses ist im wesentlichen ein programmierter Computer, der in an sich bekannter Weise aus der gemessenen Intensität des empfangenden Strahles die Dicke des Bandes 40 errechnet, wobei auch störende Einflüsse mit korrigiert werden. Es wird zum Beispiel berücksichtigt und korrigiert, daß die Intensitätsverteilung der Röntgenröhre 11 über der Breite des Strahlungsfensters nicht gleichmäßig ist. Es kann außerdem die verschiedene Empfindlichkeit über der Breite des Strahlungsempfängers korrigiert werden. Die Werte der einzelnen Meßbereiche können einem Anzeigegerät 69 zugeführt werden, dessen Anzeigebildschirm ebenfalls in die gleiche Anzahl von Meßbereichen unterteilt ist. Jedem der Meßbereiche 47 bis 61 entspricht analog und lagemäßig ein schmaler Streifen auf dem Bildschirm des Anzeigegerätes 69. Diese Streifen sind gestrichelt angedeutet. Die Werte der Dicke des Bandes 40 können digital angezeigt werden, die können aber auch als Punkte auf dem Bildschirm dargestellt werden, wobei die Höhenlage der Punkte der Größe der Dicke entspricht. Die Punkte können auch zu einer Kurve verbunden sein. Es ist auch jedes beliebige andere Anzeigerät anschließbar.

Im Weggeber 45 wird bei dem Ausführungsbeispiel nach jedem 14. Schritt die Zählung für die Zuordnung der Meßbereiche von neuem begonnen.

Als Strahlungsempfänger eignen sich z. B. Plastik-Szintillatoren, denen in bekannter Weise Photomultiplier und Verstärker oder Zähleinrichtungen nachgeschaltet sind.

Im angeführten Beispiel beträgt die Entfernung zur Mitte 30 der Röntgenröhre 11 bis zu den Strahlungsempfängern 15 bis 29 3820 mm. Die Entfernung vom Band zum mittleren Strahlungsempfänger beträgt 1200 mm. Der Abstand von der Mitte der Schlitzblende 31 bis zur Mitte 30 der Röntgenröhre 11 beträgt 530 mm. Die Schlitzblende 31 hat eine Dicke in Strahlrichtung von 180 mm. Es sind auf der Schlitzblende 31 fünfzehn Schlitze angebracht. Jeder Schlitz ist 1,2 mm breit und hat zum nächsten Schlitz einen Abstand von ca. 21 mm. Die beiden großen Begrenzungsflächen der Schlitze sind im ausgeführten Beispiel plan-parallel. Eine noch größere Genauigkeit würde erreicht werden, wenn diese Begrenzungsflächen etwas keilförmig entsprechend der Strahlrichtung zueinander stehen. Mit der Vorrichtung werden noch Dickenschwankungen des Bandes von weniger als 2 Promille gemessen.

Eine genaue Bandkantenbestimmung erfolgt z. B., wenn entsprechend Fig. 3 der Strahl 66 zunächst den Meßbereich 47 des Strahlungsempfängers 15 trifft. In dieser Stellung erfolgt keine Absorption. Beim nächsten Meßbereich 48 erfolgt eine teilweise Absorption. Im Meßbereich 49 und den folgenden Meßbereichen erfolgt die volle Absorption. Wenn z. B. der Meßbereich 48 einen Meßwert ergibt, dessen Differenz zum Meßwert des Meßbereiches 47 z. B. 40 % der Differenz der Meßwerte der Meßbereiche 47 und 49 ergibt, so liegt die Bandkante vom Meßbereich 47 um 40 % der Breite eines Meßbereiches entfernt nach rechts. Ergibt die Differenz z. B. 30 %, so liegt die Entfernung 30 % der Breite entfernt rechts. Diese Entfernung zählt von der rechten Seite des Meßbereiches 47 nach rechts in Richtung zum Meßbereich 49. Die Speicherung der Meßwerte, die Differenzbildung der Meßwerte und die daraus resultierende Lage der Bandkante erfolgt in an sich bekannter Weise im Verarbeitungsgerät 46, das einen Computer enthält.

## Patentansprüche

1. Vorrichtung zur Messung des Dickenprofils von gewalzten metallischen Blechen und Blechbändern (40) mit einer Röntgenröhre (11), mit einer dicht vor dieser liegenden, um deren Mittelpunkt drehoszillierenden Schlitzblende (31) mit mehreren Schlitzen und mit in einem Abstand vor der Schlitzblende, entlang einer Linie fest installierten, auf die Strahlung der Röntgenröhre ausgerichteten Strahlungsempfängern (15–29), und einem im Strahlengang zwischen der Röntgenröhre (11) und den Strahlungsempfängern (15–29) liegenden Auslaufrollgang für das zu messende Blech, dessen Rollrichtung senkrecht zur Linie der Strahlungsempfänger liegt und dessen Breite sich entlang der Linie der fest installierten Strahlungsempfänger (15–29) erstreckt und mit einem an die Strahlungsempfänger und einen Weggeber (45) der Schlitzposition angeschlossenen Verarbeitungsgerät (46) zur Bestimmung der Strahlungsabsorption und der Zuordnung zu den Dicken des Blechbandes (40) und den über die Breite des Blechbandes (40) verteilenden Meßpunkten oder Meßbereichen (47), welches Verarbeitungsgerät mit einem Anzeigegerät (69) verbunden ist, wobei die Schlitzblende (31) mit einem die Drehrichtung jeweils nach weniger als einer Zehntel Umdrehung umkehrenden Antrieb verbunden ist und der Antrieb aus einem Antriebsmotor (33) mit Untersetzungsgetriebe (34), einem daran angebauten Schrittgetriebe (35) und einem an dessen Abtriebswelle angeschlossenen Pendelgetriebe (36) besteht und das Schrittgetriebe zwischen den Schritten Verweilzeiten besitzt, und an den Antrieb ein mechanischer Schalter (43) oder ein berührungslos schaltendes Schaltelement angebaut ist, die durch die Drehung einer Welle (41) des Antriebes (34) ein- und ausschaltbar sind und mit einem Weggeber (45) und einem die Meßwertaufnahme ein- und ausschaltbaren Teil des Verarbeitungsgerätes (46) verbunden sind und der Schalter (43) oder das Schaltelement einen an die Stellung einer antreibenden Welle (41) des Antriebes gekoppelten, während der Verweilzeit des Schrittgetriebes (35) den Weggeber (45) und das Verarbeitungsgerät (46) in Einschaltstellung haltenden Einschaltteil (42) besitzt und einen während der Bewegungszeit des Schrittgetriebes (35) den Weggeber (45) und das Verarbeitungsgerät (46) in Ausschaltungsstellung haltenden Ausschaltteil besitzt.

2. Vorrichtung nach Anspruch 1, dadurch gekennzeichnet, daß die Anzahl der Schlitze mit der Anzahl der Strahlungsempfänger (15–29) übereinstimmt und jeder Strahlungsempfänger (15–29) von jeweils einem der durch die Schlitze hindurchtretenden Strahlen (66) bei der gesamten weniger als eine zehntel Umdrehung betragenden Teildrehung in seiner gesamten Länge oder zumindest 90% der gesamten Länge überstrichen wird.

3. Vorrichtung nach Anspruch 1, dadurch gekennzeichnet, daß die die Schaltfunktion steuernde Welle (41) für den Schalter (43) in der Drehzahl so ausgelegt ist, daß jeweils ein Schritt mit Verweilzeit der Schlitzblende (31) genau einer Umdrehung dieser Welle (41) entspricht.

4. Vorrichtung nach den Ansprüchen 1 bis 3, dadurch gekennzeichnet, daß der Weggeber (45) mit jedem einzelnen Strahlungsempfänger (15–29) und mit einem im Verarbeitungsgerät (46) befindlichen Schrittzähler verbunden ist.

5. Vorrichtung nach den Ansprüchen 1 bis 4, dadurch gekennzeichnet, daß die Teildrehung der Schlitzblende (31) so groß ausgelegt ist, daß der durch den zugeordneten Schlitz hindurchtretende Strahl (66) bei der Eichung im Soll-Zustand weniger als 95% der gesamten wirksamen Länge des Strahlungsempfängers (15) überstreicht, wobei an beiden Rändern Bereiche ausgelassen sind.

6. Vorrichtung nach den Ansprüchen 1 bis 5, dadurch gekennzeichnet, daß die Schlitzblende (31) mehr als 6 Schlitze enthält und der maximale Drehwinkel zwischen den Umkehrpunkten kleiner als 8° beträgt und die Entfernung von der Mitte der Schlitzblende bis zur gedachten Drehachse kleiner als 1/3 der Entfernung vom mittleren Strahlungsempfänger bis zur gedachten Drehachse der Schlitzblende ist.

7. Vorrichtung nach den Ansprüchen 1 bis 6, dadurch gekennzeichnet, daß die Strahlungsempfänger entlang einer kreisförmig gekrümmten Linie angeordnet sind, deren Mittelpunkt mit der gedachten Drehachse der Schlitzblende (31) zusammenfällt.

8. Vorrichtung nach den Ansprüchen 1 bis 7, dadurch gekennzeichnet, daß im Verarbeitungsgerät (46) die Meßwertauswertung so geschaltet ist, daß für die Dickenprofilangabe der Meßwert unterdrückt wird, der beim Beginn des Durchlaufs nach dem letzten Meßwert, der keine Absorption anzeigt, liegt, und daß ebenfalls derjenige Meßwert unterdrückt wird, der gegen Ende des Durchlaufs vor dem ersten Meßwert, der keine Absorption anzeigt, liegt.

9. Vorrichtung nach den Ansprüchen 1 bis 4 und 6 bis 8, dadurch gekennzeichnet, daß der Schalter (43) so eingestellt ist, daß er auf Einschaltstellung steht, wenn der Röntgenstrahl auf den für den Empfang unwirksamen Randbereich des Strahlungsempfängers auftrifft und ein Computer im Verarbeitungsgerät (46) so programmiert ist, daß ein in einem Zeitraum von weniger als 2 Stunden durch eine Eichung gewonnener Korrekturfaktor bei der Auswertung im unwirksamen Randbereich berücksichtigt wird.

10. Vorrichtung nach den Ansprüchen 1 bis 4, dadurch gekennzeichnet, daß ein im Verarbeitungsgerät (46) befindlicher Computer so programmiert ist, daß durch das Programm die Meßbereiche ermittelt werden, deren an einer Seite benachbart liegende Meßbereiche keine Absorption haben und deren an der anderen Seite liegenden Meßbereiche einen um mehr als 2% höher liegenden Grad der Absorption haben und diese so ermittelten Meßbereiche mit nur teilweiser Absorption bei der Anzeige des Dickenprofils unterdrückt werden und aus dem Grad der teilweisen Absorption und der Position des ermittelten Meßbereiches die genaue Lage der Bandkante auf der Bandstraße bestimmt und angezeigt wird.

11. Verfahren zur Eichung der Vorrichtung nach den Ansprüchen 1 bis 10, dadurch gekennzeichnet, daß ohne ein in der Vorrichtung befindliches zu messendes Band (40) gemessen wird und ein Mittelwert aus den Meßwerten der Strahlungsempfänger (15–29) errechnet wird und jeder einzelne Meßwert eines Meßbereiches (47) mit einem Korrekturfaktor so versehen wird, daß das Produkt Meßwert mal Korrekturfaktor den Mittelwert ergibt und die so gebildeten Korrektorfaktoren im Verarbeitungsgerät (46) gespeichert werden und für die Verarbeitung der bei durchstrahltem Band (40) gewonnenen Meßwerte benutzt werden.

## Claims

1. Apparatus for measuring the thickness profile of rolled strips (40) with an x-ray tube (11) with a slit diaphragm (31) with several slits located close in front of the tube oscillating with angular displacements around the centre point and with radiation receivers (15–29) rigidly installed along a line at a distance in front of the slit diaphragm (31) aligned with the beam of the x-ray tube (11), and a runout roller table for the strip to be measured located in the path of the beam between the x-ray (11) and the radiation receivers (15–29), of which the rolling direction is at right-angles to the line of the radiation receivers and with the width extending along the line of the rigidly installed radiation receivers (15–29) and with a processing instrument connected to the radiation receivers and a displacement transmitter (45) of the slit positions to determine the radiation absorption and to assign thicknesses of the strip (40) and measuring points or measuring ranges (47) distributed across the width of the strip (40), where the processing instrument is connected to an indicating instrument (69), whereby the slit diaphragm (31) is connected to a drive, which reverses the direction of rotation in each case after less than one-tenth of a revolution and the drive consists of a drive motor (33) with a stepdown gearbox (34), with a stepdown gearbox (35) attached to it and a pendulum gearbox (36) connected to its drive shaft and the step gearbox has periods of dwell between the steps, and a mechanical switch (43) or a proximity switching element is built onto the drive, which can be switched on and off by rotating a shaft (41) of the drive (34) and are connected to a displacement transmitter (45) and to a component of the processing instrument (46) which switches the recording of the measured values on and off and the switch (43) or the switching element has a switch on section (42) coupled to the position of a driving shaft (41) of the drive, which holds the displacement transmitter (45) and the processing instrument (46) in the switch in place during the period of dwell of the step gearbox (35) and has a switch off section which holds the displacement transmitter (45) and the processing instrument (46) in the switch off position during the period of motion of the stepping gearbox (35).

2. Apparatus as in claim 1, characterised in that the number of slits corresponds to the number of radiation receivers (15–29) and each radiation receiver (15–29) is scanned over its entire length or at least 90% of its entire length by a beam (66) penetrating through the slits in each case during the whole of the partial rotation amounting to less than 1/10th of a revolution.

3. Apparatus as in claim 2, characterised in that the shaft (41) controlling the switching function of the switch (43) has a design speed where one step with period of dwell of the slit diaphragm (31) will in each case correspond to exactly one revolution of this shaft (41).

4. Apparatus as in claims 1 to 3 inclusive, characterised in that the displacement transmitter (45) is connected to each individual radiation receiver (15–29) and to a step counter located in the processing instrument (46).

5. Apparatus as in claims 1 to 4 inclusive, characterised in that the size of the partial rotation of the slit diaphragm (31) is designed so that the beam (6) penetrating the assigned slit when calibrating in the reference condition will scan less than 95% of the whole effective length of the radiation receiver (15) where sections are omitted along both edges.

6. Apparatus as in claims 1 to 5 inclusive, characterised in that the slit diaphragm (31) contains more than 6 slits and a maximum angular displacement between the reversal points is less than 8° at a distance from the centre of the slit diaphragm to the imaginary axis of rotation is smaller than 1/3 of the displacement from the centre of the radiation receiver to the imaginary axis of rotation of the slit diaphragm.

7. Apparatus as in claims 1 to 6 inclusive, characterised in that the radiation receivers are arranged along a circular curved line where the centre point coincides with the imaginary axis of rotation of the slit diaphragm (31).

8. Apparatus as in claims 1 to 7 inclusive, characterised in that the measured value evaluation unit in the processing instrument (46) is designed so that the measured value representing the thickness profile, which is located at the start of the scan after the last measured value that does not show any absorption is suppressed and that similarly the measured value located towards the end of the scan before the first measured value that does not show any absorption is suppressed.

9. Apparatus as in claims 1 to 4 and 6 to 8 inclusive, characterised in that the switch (43) is adjusted in such a way that it will be in the ON position when the x-ray impinges the edge section of the radiation receiver that is ineffective for the reception and a computer in the processing instrument (46) is programmed in such a way that a correction factor derived from a calibration carried out in a period of less than 2 hours is taken into consideration when evaluating in the ineffective edge range.

10. Apparatus as in claims 1 to 4 inclusive, characterised in that a computer installed in the processing instrument (46) is programmed so that the measuring ranges on one side with no absorption and measuring ranges located on the other side with the degree of absorption reading more than 2% higher are determined by the programme and these measuring ranges with only partial absorption determined in this manner are suppressed when displaying the thickness profile and the exact position of the edge of the strip on the strip mill is determined and displayed from the degree of partial absorption and the position of the computed measuring range.

11. Process for calibrating the apparatus as in claims 1 to 10 inclusive, characterised in that measurements are carried out without a strip (40) to be measured in the apparatus and the mean value of the measured values of the radiation receivers (15–29) is computed and each individual measured value of a measuring range (47) is allocated a correction factor such that the product of the measured value times the correction factor will give the mean value and the correction factors computed in this manner are stored in the processing instrument (46) and used for processing the measured values obtained when the strip (40) is irradiated.

**Revendications**

1. Appareil de mesure du profil de l'épaisseur de tôles et de rubans laminés (40) comportant un tube à rayons X (11), avec, disposé juste devant ce dernier, un diaphragme (31) comportant plusieurs fentes, tournant en oscillant autour de son centre, et avec des récepteurs de rayonnement (15-29) fixes, disposés en ligne à une certaine distance devant le diaphragme, alignés sur le rayonnement du tube à rayons X, et un train de rouleaux de sortie situé dans le rayonnement entre le tube à rayons X (11) et les récepteurs de rayonnement (15-29) pour la tôle à mesurer dont le sens de déroulement est perpendiculaire par rapport à la ligne des récepteurs de rayonnement et dont la largeur s'étend le long de la ligne des récepteurs de rayonnement fixes (15-29), et avec un appareil de traitement (46) connecté aux récepteurs de rayonnement et à un indicateur (45) de la position des fentes, pour mesurer le rayonnement absorbé et l'associer à l'épaisseur du ruban (40) et aux points ou zones de mesure (47) distribués sur la largeur du ruban (40), lequel appareil de traitement (46) est relié à un dispositif de visualisation (69), dans lequel le diaphragme à fentes (31) est relié à une commande inversant le sens de rotation après une rotation inférieure à un dixième de tour, et la commande comprend un moteur d'entraînement (33) avec démultiplicateur (34), un dispositif pas-à-pas (35) et une commande oscillante (36) reliée à son arbre de sortie, et le dispositif pas-à-pas engendre des temps d'arrêt entre chaque pas, et un commutateur mécanique (43) ou un élément de commutation sans contact est disposé sur la commande, et est enclenché et déclenché par la rotation d'un arbre (41) de la commande (34) et est relié à un indicateur de position (45) et à une partie de l'appareil de traitement (46) enclenchant et déclenchant l'enregistrement des valeurs de mesure, et le commutateur ou élément de commutation (43) possède un élément d'enclenchement (42) couplé à la position d'un arbre menant (41) de la commande et s'arrêtant, pendant un temps d'arrêt du dispositif pas-à-pas (35), dans une position maintenant l'indicateur de position (45) et l'appareil de traitement (46) en position d'enclenchement, et possède un élément de déclenchement maintenant l'indicateur de position (45) et le dispositif de traitement (46) en position de déclenchement pendant la durée du mouvement du dispositif pas-à-pas (35).

2. Appareil selon la revendication 1, caractérisé en ce que le nombre des fentes correspond au nombre de récepteurs de rayonnement (15-29) et chaque récepteur de rayonnement (15-29) est balayé par l'un des rayons (66) traversant les fentes, sur la totalité de la rotation partielle inférieure à un dixième de tour, sur la totalité de sa longueur, ou au moins sur 90 % de la longueur totale.

3. Appareil selon la revendication 1, caractérisé en ce que l'arbre (41) commandant la fonction de commutation pour le comutateur (43) a une vitesse de rotation telle qu'un pas avec temps d'arrêt du diaphragme (31) correspond exactement à un tour de cet arbre (41).

4. Appareil selon les revendications 1 à 3, caractérisé en ce que l'indicateur de position (45) est relié à chaque récepteur de rayonnement (15-29) et à un compteur de pas se trouvant dans le dispositif de traitement (46).

5. Appareil selon les revendications 1 à 4, caractérisé en ce que la rotation partielle du diaphragme (31) est telle que le rayon (66) passant par la fente correspondante balaie, lors de l'étalonnage à l'état de consigne, moins de 95% de la longueur effective totale du récepteur de rayonnement (15), les zones des deux bords n'étant pas prises en compte.

6. Appareil selon les revendications 1 à 5, caractérisé en ce que le diaphragme (31) comporte plus de 6 fentes et l'angle de rotation maximum entre les points d'inversion est inférieur à 8°, et la distance entre le centre du diaphragme et l'axe de rotation imaginaire est inférieure au tiers de la distance entre le récepteur de rayonnement central et l'axe de rotation imaginaire du diaphragme.

7. Appareil selon les revendications 1 à 6, caractérisé en ce que les récepteurs de rayonnement sont disposés sur une ligne en arc de cercle, dont le centre coïncide avec l'axe de rotation imaginaire du diaphragme (31).

8. Appareil selon les revendications 1 à 7, caractérisé en ce que, dans l'appareil de traitement (46), l'exploitation des valeurs de mesure est commutée de manière telle que l'on supprime, pour l'indication du profil de l'épaisseur, la valeur de mesure qui se situe, au début du balayage, après la dernière valeur de mesure qui ne présente aucune absorption, et que l'on supprime de même la valeur de mesure qui, en fin de balayage, se situe avant la première valeur de mesure qui ne présente aucune absorption.

9. Appareil selon les revendications 1 à 4 et 6 à 8, caractérisé en ce que le commutateur (43) est réglé de manière telle qu'il est placé sur la position d'enclenchement lorsque le rayon X apparaît sur la zone marginale du récepteur de rayonnement inefficace pour la réception, et un ordinateur dans l'appareil de traitement (46) est programmé de manière telle qu'un facteur de correction obtenu par étalonnage à intervalles inférieurs à 2 heures est pris en compte pour l'évaluation dans le secteur marginal inefficace.

10. Appareil selon les revendications 1 à 4, caractérisé en ce qu'un ordinateur se trouvant dans l'appareil de traitement (46) est programmé de telle sorte que le programme définit les domaines de mesure dont les domaines de mesure voisins d'un côté ne présentent pas d'absorption et dont les domaines de mesure situés de l'autre côté présentent un degré d'absorption supérieur de plus de 2 %, les domaines de mesure à absorption partielle ainsi définis étant supprimés lors de l'affichage du profil d'épaisseur, et la position exacte de la limite du ruban sur le train de laminoir est déterminée et affichée à partir du degré d'absorption partielle et de la position du domaine de mesure défini.

11. Procédé pour l'étalonnage de l'appareil selon les revendications 1 à 10, caractérisé en ce que la mesure est opérée sans qu'un ruban (40) à mesurer se trouve dans l'appareil et que l'on calcule une valeur moyenne à partir des valeurs de mesure des récepteurs de rayonnement (15-29) et chaque valeur de mesure d'un domaine de mesure (47) est pourvue d'un facteur de correction de manière telle que le produit de la valeur de mesure par le facteur de correction donne la valeur moyenne et que les facteurs de correction ainsi formés sont mis en mémoire dans l'appareil de traitement (46) et utilisés pour le traitement des valeurs de mesure obtenues pour un ruban (40) irradié.

EP 0 212 078 B1

Fig. 1

Fig. 2

Fig. 3

Fig. 4